Europäisches Patentamt

European Patent Office

Office européen des brevets

(11) Publication number: **0 279 127 B1**

## EUROPEAN PATENT SPECIFICATION

(45) Date of publication of patent specification: **15.04.92**  (51) Int. Cl.⁵: **F16D 3/20**

(21) Application number: **87311511.7**

(22) Date of filing: **30.12.87**

---

(54) **Telescopic tripot universal joint.**

---

(30) Priority: **28.01.87 US 7707**

(43) Date of publication of application:
**24.08.88 Bulletin 88/34**

(45) Publication of the grant of the patent:
**15.04.92 Bulletin 92/16**

(84) Designated Contracting States:
**DE FR GB**

(56) References cited:
**FR-A- 2 199 825       GB-A- 2 018 393
GB-A- 2 070 195       GB-A- 2 099 549
US-A- 1 863 244       US-A- 4 224 806**

(73) Proprietor: **GENERAL MOTORS CORPORA-
TION
General Motors Building 3044 West Grand
Boulevard
Detroit Michigan 48202(US)**

(72) Inventor: **Farrell, Robert C.
165 Harvest Lane
Frankenmuth Michigan 48734(US)**
Inventor: **McGregor, David J.
3259 Arbutus
Saginaw Michigan 48603(US)**

(74) Representative: **Breakwell, John Neil Bower et
al
GM Patent Section Vauxhall Motors Limited
Luton Office (F6) P.O. Box No. 3 Kimpton
Road
Luton Bedfordshire LU2 OSY(GB)**

---

Rank Xerox (UK) Business Services

## Description

This invention relates to a telescopic tripot universal joint as specified in the preamble of claim 1, for example as disclosed in FR-A-2,199,825.

Telescopic tripot-type universal joints are utilised in automotive vehicle axle driveshafts, and especially in front-wheel drive vehicles between the transaxle differential and the driving wheel.

A telescopic constant-velocity joint should not only transmit the torque at various speeds, angles and telescopic positions, but also prevent any vibrations of the engine from being transmitted through the joint and driveshaft to the driving wheel and the vehicle structure. In addition, when the universal joint operates at an angle, it should not produce any oscillating axial excitation which may be capable of initiating vibrations in the driveshaft or in the structure of the vehicle.

US-A-3 125 870 discloses a conventional prior-art type of telescopic tripot universal joint These universal joints have been one of the best telescopic-type universal joints available for isolating engine vibrations from the rest of the vehicle. However, because of their frictional operating characteristics, these conventional prior-art tripot universal joints produce internally generated oscillating axial forces, which are related to the transmitted torque and the joint angle. During severe acceleration at low vehicle speeds, these cyclic axial forces can be of sufficient magnitude to produce a "shudder" type of disturbance which has a frequency equal to three times the shaft speed.

The conventional tripot joint typically consists of an outer housing member with three equally circumferentially spaced longitudinal drive channels drivably connected to an inner drive spider member by means of three trunnion-mounted drive rollers that are capable of rotatable and slidable movement on their respective spider trunnions.

When the outer and inner drive members are aligned at zero-degree joint angle and axial stroking is imposed on the joint under a torsional load, pure rolling motion occurs between the drive rollers and their corresponding drive channels. However, when such a joint is operated with the outer and inner drive members inclined at an oblique angle to one another, the drive rollers are brought into an inclined relation with their respective drive channels, so that each drive roller does not roll in the direction of its corresponding drive channel, and consequently some sliding or skidding takes place between the two contacting surfaces, in addition to the rolling motion. As the joint angle increases, the amount of sliding also increases, and the amount of rolling decreases. As the joint rotates, this relative rolling-to-sliding relationship of each drive roller in its drive channel varies in an oscillating manner, and produces a cyclic axial force along the rotational axis of the joint which has a frequency of three times the shaft speed.

In addition, as the joint rotates at an oblique angle, relative endwise sliding movement of each drive roller on its corresponding spider trunnion also varies in a similar oscillating manner, due to the three-per-revolution orbiting characteristic of the joint. These effects are additive to the previously described cyclic axial force produced by the roller-to-drive channel contact relationship.

US-A-1,863,244 discloses a bi-pot joint in which the spider centre does not orbit during joint operation, and therefore the bi-pot joint does not experience shudder problems.

The present invention is concerned with the provision of a telescopic tripot universal joint which substantially reduces or eliminates the overall level of the frictional effects and the resulting internally generated cyclic axial force produced by a conventional telescopic universal joint.

To this end a telescopic tripot universal joint in accordance with the present invention is characterised over FR-A-2,199,825 by the features specified in the characterising portion of claim 1.

In a preferred embodiment of a telescopic tripot universal joint in accordance with the present invention, three cylindrical trunnions are spaced circumferentially at angles of substantially 120° from each other around the rotational axis of the inner drive member, the outer drive member (that is, the housing) has three longitudinal drive channels equally spaced about its rotational axis, each of which has a pair of flat parallel drive tracks that are disposed on opposite sides of the drive channel, and three drive rollers are rotatably and slidably mounted on the three respective cylindrical trunnions and are disposed in the three respective drive channels between the two flat parallel drive tracks, whereby to permit nutation or wobbling movement of the drive rollers during operation of the tripot universal joint. Specifically, each of the drive rollers has a radial bore which is convexly shaped so as to permit the nutation or wobbling movement of the drive rollers on the radial trunnions during operation of the telescopic tripot universal joint. The radial trunnions have stops which limit the outward movement of the drive rollers on the trunnions during operation of the telescopic tripot universal joint, and the drive rollers are mounted on the radial trunnions with a full complement of cylindrical needle rollers disposed between the radial bore of each drive roller and the cylindrical bearing surface of the respective trunnion. The convexly shaped radial bore of each drive roller has a crown which is mid-way between the ends of the drive roller such that the radial bore flares towards each end of the drive roller, and the convexly-shaped radial bore of each intermediate drive roller has a profile which is formed by a radius of about 80 mm and produces a drop of approximately 0.20 mm from the crown at each end of the radial bore.

In the drawings:

Figure 1 is a fragmentary longitudinal section showing a preferred embodiment of a telescopic tripot universal joint in accordance with the present invention;

Figure 2 is a transverse section of the telescopic tripot universal joint shown in Figure 1, substantially on the line 2--2 of Figure 1, in the direction of the arrows;

Figure 3 is a fragmentary enlarged view of the indicated portion of Figure 2;

Figure 4 is a fragmentary enlarged view similar to Figure 3, but illustrating another operating position;

Figure 5 is a transverse section of a modified embodiment of a telescopic tripot universal joint in accordance with the present invention; and

Figure 6 is a fragmentary enlarged view of the indicated portion of Figure 5.

With reference now to the drawings, the invention is illustrated in the context of a telescopic tripot universal joint 10 which comprises an inner drive member 12, an outer drive member 14 and a plurality of drive rollers 16.

The outer drive member 14 has a longitudinal axis 18 about which it rotates, and three radial drive channels 20 which are equally spaced circumferentially at angles of substantially 120 degrees from each other. The longitudinal drive channels 20 may be straight, with centre-lines which are parallel to the longitudinal axis 18 as shown in the drawings, or alternatively helical, with centre-lines which are at a small angle, such as 6°, with respect to the longitudinal axis 18. In any event, each radial drive channel 20 has a pair of flat parallel drive tracks 22, on opposite sides of the drive channel.

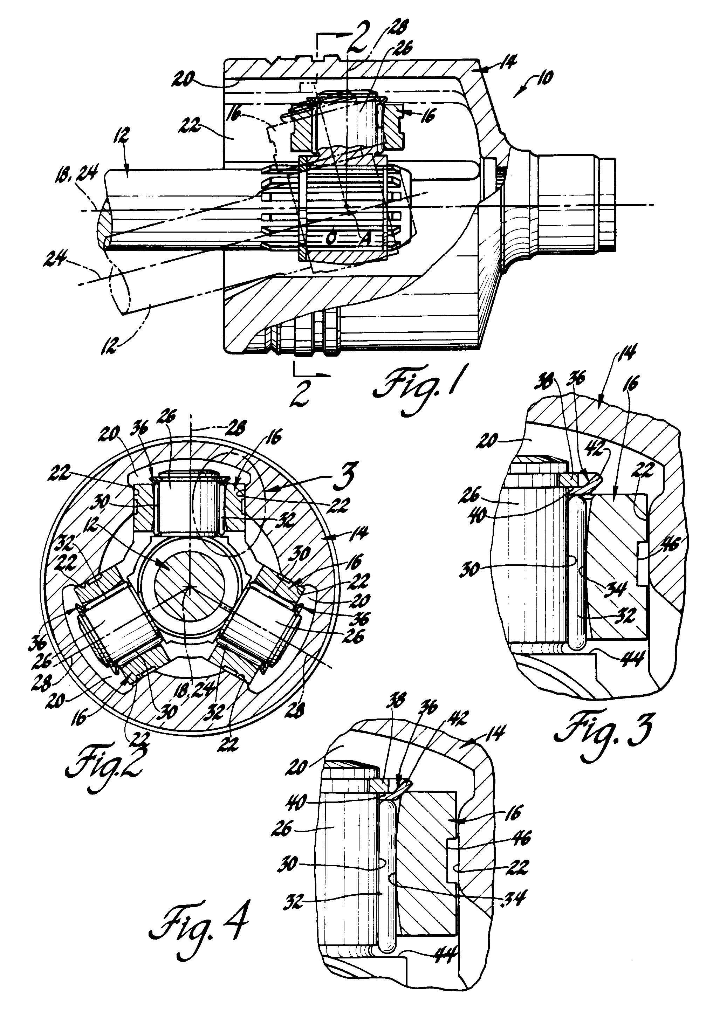

The inner drive member 12 has a longitudinal axis 24 about which it rotates. The longitudinal axes 18 and 24 coincide when the tripot universal joint 10 is at zero angle, as shown in solid lines in Figure 1, and they intersect at a point on the longitudinal axis 18 which is spaced from the joint centre O when the tripot universal joint is articulated (bent) at an oblique angle, as shown in phantom lines in Figure 1.

The inner drive member 12 has three radial trunnions 26 equally spaced circumferentially at angles of substantially 120° from each other on coplanar radial axes 28 which intersect the longitudinal axis 24 perpendicularly at a spider centre A. The spider centre A, which lies on the longitudinal axis 18 of the outer drive member 14 at a zero-degree articulation angle of the joint, is displaced radially from the longitudinal axis 18, and, when the tripot universal joint 10 is articulated at an oblique angle and rotated at a given speed, orbits around the joint centre O at three times the joint speed.

The radial trunnions 26 comprise cylindrical bearing surfaces 30 which are concentric with respect to the radial axes 28. The drive rollers 16 are mounted on the radial trunnions 26 with a full complement of needle rollers 32 disposed between the radial bore 34 of each drive roller 16 and the cylindrical bearing surface 30 of the respective trunnion 26.

The radial bore 34 of each drive roller 16 is convexly shaped. The crown of the convexly shaped radial bore 34 is mid-way between the ends of the drive roller 16, and consequently the bore 34 flares towards each end of the drive roller 16. This profile of the radial bore 34 is of sufficient convexity to permit a nutation or wobbling action of the drive roller 16 on the radial axis of the radial trunnion 26.

A suitable profile for the radial bore 34 of drive rollers 16 having a cylindrical outer diameter of about 40 mm and a radial bore of about 25.5 mm may be formed by a radius of about 80 mm, which produces a drop of approximately 0.20 mm from the crown at each end of the radial bore 34 in a drive roller which is about 17 mm in height.

The specific profile of the radial bore 34 will require to be adjusted for size changes in the drive rollers 16. In general, the degree of convexity should increase with increasing roller diameter.

A stop washer 36 is retained at the outer end of each trunnion 26 by means of a snap ring 38 disposed in a groove in the trunnion end. The stop washer has a flat inner portion 40 and a conical outer portion 42. The flat inner portion 40 retains the needle rollers 32 in the outward direction, and an annular shoulder 44 of the inner drive member 12 at the inner end of the trunnion 26 retains the needle rollers 32 in the inward direction. Each drive roller 16 can move radially of the joint with respect to the trunnion 26 and needle rollers 32 on which it is mounted, within the limits of the annular shoulder 44 in the inward direction, and the conical outer portion 42 of the stop washer 36 in the outward direction.

When the tripot universal joint 10 is articulated (bent) at an oblique angle and rotated, the drive rollers 16 move outwardly against the conical outer portions 42 of the stop washers 36, as shown in Figure 4. The drive rollers 16 move up and down and back and forth in the respective radial drive channels 20 with a nutation or wobbling motion during each revolution. This nutation or wobbling movement, which is due to the convex profile of the radial bores 34, reduces the percentage amount of sliding friction between the contacting surfaces of a drive roller and its drive channel, whereby the overall frictional resistance of the tripot universal joint 10 is reduced.

Consequently, the tripot universal joint 10 in accordance with the present invention reduces the overall level of frictional effects, and the resultant cyclic axial force along the rotational axis of the joint, which in turn reduces the "shudder" disturbance level in a front-wheel drive vehicle when the joint operates at a given oblique angle.

The drive rollers 16 may also, as shown, include a peripheral oil groove 46 to improve lubricant distribution.

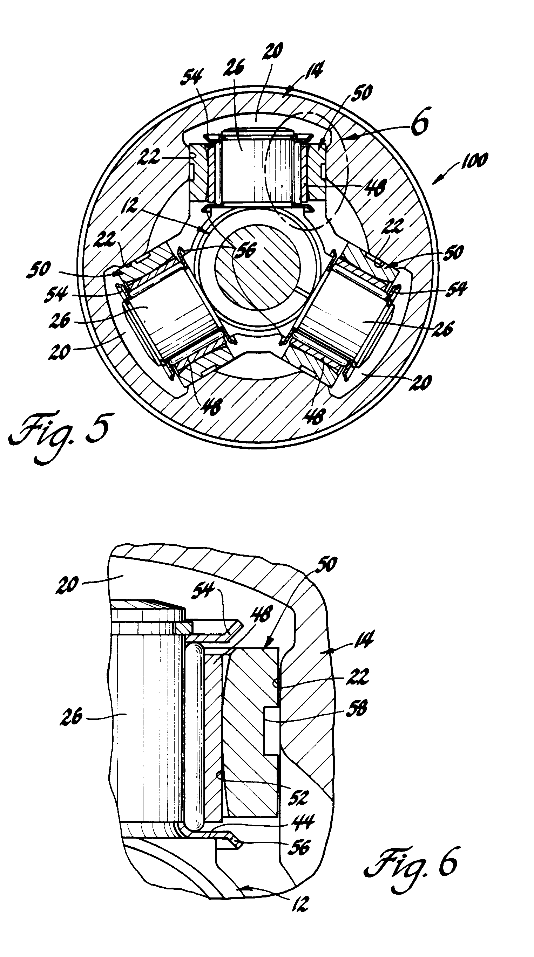

Figures 5 and 6 of the drawings show a modified embodiment of a universal joint in accordance with the present invention, this universal joint 100 including a sleeve 48 that is disposed between the needle rollers 32 and appropriately modified drive rollers 50.

In this modified embodiment, the drive rollers 50 are mounted on the radial trunnions 26 with the sleeve 48 and the full complement of needle rollers 32 disposed between the radial bore 52 of each drive roller 16 and the cylindrical bearing surface 30 of the respective trunnion 26.

The drive rollers 50 of this modified embodiment have a thinner wall than the drive rollers 16 of the first embodiment. However, the radial bore 52 of each of the drive rollers 50 is convexly shaped as before. That is, the crown of the convexly shaped radial bore 52 is mid-way between the ends of the drive roller 50, and the bore 52 flares towards each end of the drive roller 50. The profile of the radial bore 52 is also of sufficient convexity to permit the desired nutation or wobbling action of the drive roller 50 on the radial axis of the radial trunnion 26.

A suitable profile for the radial bore 52 of drive rollers 50 having a cylindrical outer diameter of about 40mm and a radial bore of about 30.5 mm may be formed by the use of a radius of about 80 mm, which produces a drop of approximately 0.20 mm from the crown at each end of the radial bore 34, in a drive roller which is about 17 mm in height.

As in the case of the first embodiment, the specific profile of the radial bore 52 must be adjusted to take account of size changes for the drive rollers 16. In general, the degree of convexity increases with increasing roller diameter.

The modified universal joint 100 has a larger-diameter stop washer 54 at the outer end of the trunnion 26, and an inner stop washer 56 is seated on the inner drive member shoulder 44 to compensate for the larger-diameter radial bore 52 of the drive roller 50. The modified universal joint 100 is otherwise the same as the universal joint 10 of the first embodiment, and like reference numerals have been used for corresponding parts.

Each drive roller 50 may also have a peripheral oil groove 58 for improved lubricant distribution.

## Claims

1. A telescopic tripot universal joint in which a first drive member (14) has a first longitudinal axis (18) and three longitudinal drive channels (20) equally circumferentially spaced at angles of substantially 120° from each other, each longitudinal drive channel (20) includes a pair of flat parallel drive tracks (22) located on opposite sides of the drive channel (20), a second drive member (12) has a second longitudinal axis (24) and three radial trunnions (26) equally circumferentially spaced at angles of substantially 120° from each other on coplanar radial axes which intersect the second longitudinal axis at a spider centre (A), the radial trunnions (26) have cylindrical bearing surfaces (30) and are disposed in the respective longitudinal drive channels (20) of the first drive member (14), three cylindrical drive rollers (16) are disposed in the respective longitudinal drive channels (20) between the flat parallel drive tracks (22) and are rotatably and slidably mounted on the respective radial trunnions (26), and each cylindrical drive roller (16) has a radial bore (34), characterized in that the radial trunnions (26) have outer stops (36) which are engaged by the drive rollers to limit outward movement of the drive rollers (16) with respect to the radial trunnions (26) during operation of the telescopic tripot universal joint, and in that the radial bore (34) of each cylindrical drive roller (16) is convexly shaped so as to permit nutational or wobbling movement of the drive rollers (16) with respect to the radial trunnions (26) responsive to orbiting of the spider centre with respect to the first longitudinal axis (18) during operation of the telescopic tripot universal joint.

2. A telescopic tripot universal joint according to claim 1, characterised in that the outer stops comprise stop washers (36) which are disposed at the outer ends of the trunnions (26) and have outer conical portions (42) for limiting the outward movement of the drive rollers (16) with respect to the radial trunnions (26).

3. A telescopic tripot universal joint according to claim 1 or claim 2, characterised in that the convexly shaped radial bore (34) of each drive roller (16) has a crown which is mid-way between the ends of the drive roller (16), such that the radial bore (34) flares towards each end of the drive roller (16).

4. A telescopic tripot universal joint according to claim 3, characterised in that the convexly shaped radial bore (34) of each drive roller (16) has a profile which is of a radius that produces a drop of approximately 0.20 mm from the crown at each end of the radial bore (34).

5. A telescopic tripot universal joint according to any one of claims 1 to 4, characterised in that a full complement of cylindrical needle rollers (32) is disposed between the radial bore (34) of each drive roller (16) and the cylindrical bearing surface (30) of its respective trunnion (26).

6. A telescopic tripot universal joint according to claim 5, characterised in that the radial bore (34) of each drive roller (16) engages the full complement of cylindrical needle rollers (32) disposed between the radial bore (34) of each drive roller (16) and the cylindrical bearing surface (30) of its respective trunnion (26).

7. A telescopic tripot universal joint according to claim 5, characterised in that a sleeve (48) is disposed between the radial bore (52) of each drive roller (50) and the full complement of cylindrical needle rollers (32), and an inner stop washer (56) is provided at the inner end of each drive roller (50).

**Revendications**

1. Joint universel télescopique tripode, dans lequel un premier élément d'entraînement (14) présente un premier axe longitudinal (18) et comporte trois rainures longitudinales d'entraînement (20) uniformément espacées l'une de l'autre dans le sens circonférentiel en faisant des angles de pratiquement 120°, chaque rainure longitudinale d'entraînement (20) comprend deux chemins d'entraînement (22), plats et parallèles, disposés sur des faces opposées de cette rainure d'entraînement (20), un second élément d'entraînement (12) présente un second axe longitudinal (24) et comporte trois tourillons radiaux (26) uniformément espacés l'un de l'autre dans le sens circonférentiel en faisant des angles de pratiquement 120°, en étant disposés suivant des axes radiaux qui sont coplanaires et coupent le second axe longitudinal en un centre (A) du bloc rayonnant, les tourillons radiaux (26) présentent des surfaces cylindriques de portée (30) et sont disposés dans les rainures longitudinales d'entraînement (20) respectives du premier élément d'entraînement (14), trois galets cylindriques d'entraînement (16) sont disposés dans les rainures longitudinales d'entraînement (20) respectives entre les chemins d'entraînement (22) plats et parallèles et sont montés de façon à pouvoir se déplacer en rotation et en translation sur les tourillons radiaux respectifs et chaque galet cylindrique d'entraînement (16) comporte un alésage radial (34), caractérisé en ce que les tourillons radiaux (26) comportent des butées extérieures (36) au contact desquelles les galets d'entraînement viennent de façon à limiter un déplacement vers l'extérieur de ces galets d'entraînement (16) vis-à-vis des tourillons radiaux (26) durant un fonctionnement du joint universel télescopique tripode et en ce que l'alésage radial (34) de chaque galet cylindrique d'entraînement (16) a une forme convexe, de façon à permettre un mouvement de nutation ou battement des galets d'entraînement (16) vis-à-vis des tourillons radiaux (26) sous l'effet d'un mouvement orbital du centre du bloc rayonnant vis-à-vis du premier axe longitudinal (18) durant un fonctionnement du joint universel télescopique tripode.

2. Joint universel télescopique tripode suivant la revendication 1, caractérisé en ce que les butées extérieures sont constituées par des rondelles de butée (36) qui sont disposées aux extrémités extérieures des tourillons (26) et comportent des parties extérieures coniques (42) permettant de limiter le déplacement des galets d'entraînement (16) vers l'extérieur vis-à-vis des tourillons radiaux (26).

3. Joint universel télescopique tripode suivant la revendication 1 ou 2, caractérisé en ce que l'alésage radial (34), de forme convexe, de chaque galet d'entraînement (16) a un sommet de profil qui est situé à mi-distance entre les extrémités du galet d'entraînement (16), de sorte que cet alésage radial (34) s'évase vers chaque extrémité du galet d'entraînement (16).

4. Joint universel télescopique tripode suivant la revendication 3, caractérisé en ce que l'alésage radial (34), de forme convexe, de chaque galet d'entraînement (16) a un profil qui a un rayon qui produit, à chaque extrémité de l'alésage radial (34), un recul d'approximativement 0,20 mm par rapport à ce sommet de profil.

5. Joint universel télescopique tripode suivant l'une quelconque des revendications 1 à 4, caractérisé en ce qu'un jeu complet d'aiguilles cylindriques de roulement (32) est disposé entre l'alésage radial (34) de chaque galet d'entraînement (16) et la surface cylindrique de portée (30) de son tourillon respectif (26).

6. Joint universel télescopique tripode suivant la revendication 5, caractérisé en ce que l'alésage radial (34) de chaque galet d'entraînement (16) est au contact du jeu complet d'aiguilles cylindriques de roulement (32) disposé entre l'alésage radial (34) de chaque galet d'entraînement (16) et la surface cylindrique de portée (30) de son tourillon (20) respectif.

7. Joint universel télescopique tripode suivant la revendication 5, caractérisé en ce qu'une douille (48) est disposée entre l'alésage radial (52) de chaque galet d'entraînement (50) et le jeu complet d'aiguilles cylindriques de roulement (32) et en ce qu'une rondelle intérieure de butée (56) est prévue à l'extrémité intérieure de chaque galet d'entraînement (50).

**Patentansprüche**

1. Teleskopisches Dreifuß-Universalgelenk, bei dem ein erstes Antriebsglied (14) eine erste Längsachse (18) und drei Längsantriebskanäle (20) mit gleichem Umfangsabstand bei Winkeln von im wesentlichen 120° voneinander besitzt, jeder Längsantriebskanal (20) ein Paar von ebenen parallelen Antriebsbahnen (22) enthält, die an entgegengesetzt liegenden Seiten des Antriebskanals (20) angeordnet sind, ein zweites Antriebsglied (12) eine zweite Längsachse (24) besitzt und drei radiale Drehzapfen (26), die in Umfangsrichtung gleiche Abstände mit Winkeln von im wesentlichen 120° voneinander besitzen an koplanaren Radialachsen, welche die zweite Längsachse an einem Dreifuß-Zentrum (A) schneiden, wobei die radialen Drehzapfen (26) zylindrische Lagerflächen (30) besitzen und in den jeweiligen Längsantriebskanälen (20) des ersten Antriebsgliedes (14) angeordnet sind, drei zylindrische Antriebswalzen (16) in den jeweiligen Längsantriebskanälen (20) zwischen den flachen Parallelantriebsbahnen (22) angeordnet und dreh- und gleitbar an den jeweiligen radialen Drehzapfen (26) angebracht sind, und jede zylindrische Antriebswalze (16) eine Radialbohrung (34) besitzt, dadurch gekennzeichnet, daß daß die radialen Drehzapfen (26) äußere Anschläge (36) besitzen, mit denen die Antriebswalzen in Eingriff sind, um Bewegung der Antriebswalzen (16) nach außen mit Bezug auf die radialen Drehzapfen (26) während des Betriebs des teleskopischen Dreifuß-Universalgelenks zu begrenzen, und daß die Radialbohrung (34) jeder zylindrischen Antriebswalze (16) konvex geformt ist, um so Nutations- oder Wobbel-Bewegung der Antriebswalzen (16) mit Bezug auf die radialen Drehzapfen (26) in Reaktion auf den Umlauf des Dreifuß-Zentrums bezüglich der ersten Längsachse (18) während des Betriebs des teleskopischen Dreifuß-Universalgelenks zuzulassen.

2. Teleskopisches Dreifuß-Universalgelenk nach Anspruch 1, dadurch gekennzeichnet, daß die äußeren Anschläge Anschlag-Scheiben (36) umfassen, die an den äußeren Enden der Drehzapfen (26) angeordnet sind und äußere konische Abschnitte (26) zum Begrenzen der Bewegung der Antriebswalzen (16) nach außen bezüglich der radialen Drehzapfen (26) besitzen.

3. Teleskopisches Dreifuß-Universalgelenk nach Anspruch 1 oder 2, dadurch gekennzeichnet, daß die konvex geformte Radialbohrung (34) jeder Antriebswalze (16) eine Krone besitzt, die sich in der Mitte zwischen den Enden der Antriebswalze (16) befindet, so daß sich die Radialbohrung (34) zu jedem Ende der Antriebswalze (16) hin erweitert.

4. Teleskopisches Dreifuß-Universalgelenk nach Anspruch 3, dadurch gekennzeichnet, daß die konvex geformte Radialbohrung (34) jeder Antriebswalze (16) ein Profil mit einem Radius besitzt, der einen Abfall von annähernd 0,20 mm von der Krone zu jedem Ende der Radialbohrung (34) erzeugt.

5. Teleskopisches Dreifuß-Universalgelenk nach einem der Ansprüche 1 bis 4, dadurch gekennzeichnet, daß ein vollständiger Satz von zylindrischen Nadelwalzen (32) zwischen der Radialbohrung (34) jeder Antriebswalze (16) und der zylindrischen Lagerfläche (30) ihres jeweiligen Drehzapfens (26) angeordnet ist.

6. Teleskopisches Dreifuß-Universalgelenk nach Anspruch 5, dadurch gekennzeichnet, daß die Radialbohrung (34) jeder Antriebswalze (16) den zwischen der Radialbohrung (34) jeder Antriebswalze (16) und der zylindrischen Lagerfläche (30) ihres jeweiligen Drehzapfens (26) angeordneten vollständigen Satz zylindrischer Nadelwalzen (32) beaufschlagt.

7. Teleskopisches Dreifuß-Universalgelenk nach Anspruch 5, dadurch gekennzeichnet, daß eine Hülse (48) zwischen der Radialbohrung (52) jeder Antriebswalze (50) und dem vollständigen Satz zylindrischer Nadelwalzen (32) angeordnet und eine innere Anschlag-Scheibe (56) an dem inneren Ende jeder Antriebswalze (50) vorgesehen ist.

Fig. 1

Fig. 2

Fig. 3

Fig. 4

Fig. 5

Fig. 6